# EUROPEAN PATENT SPECIFICATION

(11) **EP 2 893 582 B1**
(45) Date of publication and mention of the grant of the patent: **16.11.2016**
(21) Application number: 13756881.2
(22) Date of filing: 30.08.2013
(51) Int. Cl.: H01M 4/133, H01M 4/1393, H01M 4/587, H01M 10/0525, H01M 2/16

(54) **A STRUCTURAL BATTERY HALF CELL, A STRUCTURAL BATTERY AND THEIR MANUFACTURE**
HALBZELLE FÜR EINE STRUKTURBATTERIE, STRUKTURBATTERIE UND DEREN HERSTELLUNG
DEMI-CELLULE DE BATTERIE STRUCTURALE, BATTERIE STRUCTURALE ET LEUR FABRICATION

(30) Priority: 03.09.2012 SE 1200531; 12.09.2012 US 201261700112 P; 23.01.2013 SE 1350073
(43) Date of publication of application: 15.07.2015
(73) Proprietor: Swerea Sicomp AB, 941 26 Piteå (SE)
(72) Inventor: ASP, Leif, S-431 22 Mölndal (SE); BISMARCK, Alexander, South Kensington London SW7 2AZ (GB); LINDBERGH, Göran, S-100 44 Stockholm (SE); LEIJONMARCK, Simon, S-100 44 Stockholm (SE); CARLSON, Tony, S-431 22 Mölndal (SE); KJELL, Maria, S-100 44 Stockholm (SE)
(74) Representative: Bergenstråhle Group AB
(86) International application number: PCT/EP2013/068024
(87) International publication number: WO 2014/033276

(56) References cited:
- EP-A1- 2 455 997
- GB-A- 1 404 290
- US-A- 5 254 223
- US-A1- 2010 330 419
- HONG LI ET AL: "Electrochemical polymerization of xylene derivatives on carbon fiber", POLYMER COMPOSITES, vol. 12, no. 3, 1 June 1991 (1991-06-01), pages 191-195, XP055079238, ISSN: 0272-8397, DOI: 10.1002/pc.750120309

## Description

### Technical field

The present invention relates generally to structural battery half cells and structural batteries based on polymer electrolyte coated commercial carbon fibers acting as negative electrodes. The design of the battery allows a scalable and three dimensional design. In particular a microbattery is envisaged.

The design used for the micro-battery is fully scalable and can also be applied on larger cells. The design allows for a more or less free forming of the battery.

### Background

The traditional design of batteries or micro-batteries is based on a sandwiched structure composed of thin film electrodes and a solid electrolyte. While this type of structure is relatively easy to fabricate using various film-forming techniques, it suffers from low areal energy density due to limited possibility to utilize the full depth of the electrodes if the films are made too thick. An additional constraint is imposed by the solid electrolyte, which together with the diffusion rate in the electrodes determines the rate capability of the battery.

In order to overcome these limitations many alternative designs have been suggested, all with an aim to increase the areal energy and power density by forming three-dimensional microstructures. In the literature serrated or stepped structured electrodes as well as pillars formed by micro pattering can be found. These designs highly increase the exposed surface and makes significant higher areal energy densities possible. However, this is often achieved at the expense of quite complicated manufacturing methods, and many of the fabrication methods have limitations in the choice of utilizable materials. Cylindrical designs based on concentrically ordered layers of active materials and electrolyte, respectively, have also been proposed. The core of the fiber can then either act as a pure current collector or exhibit storage capabilities.

Prior art document US 2010/0330419 A1 discloses an electrode fiber for use in a battery electrode comprising a core comprising a first electrochemically active material, a shell comprising a separator material and/or an electrolyte material formed around the core and a second shell formed around the shell which is electrochemically opposite the first active material. The core and shells form the fiber by means of an electrospinning process using a nozzle having three concentric tubes. One disadvantage of this battery electrode is its inability to carry mechanical load. A further disadvantage is the low insulation capabilities provided by the second shell, which may result in short circuiting the battery.

Prior art document US2010/0259866 A1 discloses a supercapacitor formed based on radial fiber coating geometry. Carbon fiber electrodes are surrounded by sheath of electrolyte and a conducting outer sheath. A structural resin holds the fibers in place. In a limiting case, the outer conductive sheath entirely replaces the structural resin.

A prior art document published in Progress in Polymer Science 35(2010) 113-140, by S. Gabriel et al describes chemisorbing of synthetic polymers onto a variety of conducting surfaces which may comprise carbon, by cathodic electro grafting of acrylic monomers.

Further prior art documents comprise Failure analysis and fractography of polymer composites, p. 114, by Greenhalgh E.S and Principles of Polymerization, 2nd ed, p 386-388, by Odian G.

US 5,254,223 discloses a process for preparation of a semipermeable polymer layer, said polymer layer having a thickness, exhibiting ion-exchanging capability and ion-conducting capability. The process comprises the steps of: (a) producing said polymer layer from an electrolyte bath by electrochemical polymerization of a OH-containing aromatic monomer, which contains acidic or basic functionalized groups; (b) depositing in situ said polymer layer on an electrically conducting substrate; and (c) subsequently self cross-linking said polymer layer by one of heating and irradiating.

General drawbacks in the prior art include that structural batteries with good properties are difficult of impossible to manufacture. Further drawbacks include that thin electrolytes in batteries are difficult to manufacture, especially in industrial scale.

### Description

It is an object of the present invention to obviate at least some of the disadvantages in the prior art and provide a battery half cell and a battery, which are scalable and may take up mechanical load.

In a first aspect there is provided a battery half cell comprising at least one carbon fiber as negative electrode, said carbon fiber comprising a plurality of layers with carbon atoms having graphite structure, said plurality of layers having an ability of intercalating metal ions, said carbon fiber having a stiffness of at least 100 GPa and a strength of at least 1 GPa in the longitudinal direction of said fiber, said carbon fiber is at least partially coated with at least one electrically insulating polymer layer acting as an ion conducting electrolyte, wherein said insulating polymer layer is an ionic conductor for metal ions, said insulating polymer layer having a stiffness of at least 0.5 MPa said insulating polymer layer having an ionic conductivity of at least 10⁻¹⁰ S/m and an electrical resistivity of at least 10¹⁰ Ωm. This will give a battery half cell.

In an alternative embodiment the electrical resistivity of the insulating polymer layer is at least 10¹² Ωm.

In one embodiment the battery half cell further comprises a material as a positive electrode applied outside and in contact with said electrically insulating and ionically conducting polymer layer, said positive electrode material being in contact with a conductor adapted to collect an electrical current from the positive electrode. This will give a battery. Thus as a further aspect there is provided a battery. In one embodiment the positive electrode material outside and in contact with the electrically insulating and ionically conducting polymer layer is a gel.

Electro-driven polymerization is used to apply the electrically conducting polymer, the electro-driven polymerization provides a battery wherein the polymer layer may be electrically insulating despite its thinness. One advantage of electrochemical coating such as an electro-driven polymerization reaction, when applying the electrically insulating polymer layer acting as an electrolyte, is that the polymerization is initiated on all bare carbon surfaces. Thus uncoated spots are avoided so that a coating entirely or essentially free of defects is achieved. When the polymerization has progressed so that the polymer layer is electrically insulating the polymerization reaction automatically stops. A skilled person realizes that the current which should be applied during the electro-driven polymerization must be adapted to the circumstances such as the monomers utilized for the polymerization, solvent and other conditions. The electro-driven polymerization is a polymerization reaction which is electrically driven, i.e. there is an electrical potential between the carbon fiber to be coated and the surrounding solution comprising monomer units. A current is flowing driving the polymerization reaction. Through the electro-driven polymerization it is possible to achieve a perfectly coated surface entirely free or essentially free of parts without coating. As soon as there is an uncoated spot a polymerization reaction will start on the uncoated bare carbon fiber during the electro driven polymerization reaction. Uncoated spots may otherwise cause undesired short circuit. As a result, a battery or cell may be provided wherein short-circuits of the cell can be avoided despite the use of a very thin layer of polymer. The possibility to use a thin polymer layer reduces at the same time the distance over which the metal ions must be transported thereby retaining a sufficient ion conductivity/mobility. Further, the process itself is self inhibitory which provides a robust and reliable battery eliminating the need of costly testing during manufacture. At the same time, the relatively small dimensions of the battery cell enable the scalability wherein a large number of carbon fibers are arranged in parallel. A further advantage of the electro-driven polymerization is that it gives covalent bonds to the coated carbon fiber.

The material which is a positive electrode contributes to the desired mechanical properties of the battery. By adding a suitable material or mixture of materials it is possible to obtain a battery with certain mechanical properties. In one embodiment the fibers are woven in the battery surrounded by a positive electrode material. This may be achieved by dispersion of the nano sized cathode material and carbon black in a lithium conductive polymer resin which is then introduced in the fibre material by infusion or pre-pregging prior to cure. Another option is to introduce the nano sized particles using a binder material prior to infusion of the multifunctional polymer resin.

One advantage is that carbon fibers are utilized. Carbon fibers are well studied and their manufacture is well known and understood. Carbon fibers are commercially available in various qualities.

One additional advantage is the possibility to use the same design independently of the desired capacity of the battery. If a higher areal energy density is required the battery can simply be made thicker while other properties remain unchanged.

One additional advantage is that the battery is scalable. The storage capacity is increased by adding another carbon fiber. Essentially, there is no upper limit to the number of carbon fibers that may be arranged alongside each other.

One additional advantage is that the polymer layer, coated on the carbon fiber, having a stiffness of at least 0.5 MPa may take up mechanical load unlike liquid electrolytes and therefore making them more robust than other comparable electrolytes. The value of the polymer stiffness is the same as the storage modulus (E') and is determined by DMTA according to the following procedure. Dynamical Mechanical Analysis (DMA) tests are performed in tensile mode. Samples pieces are cut from the initial sample pieces from the curing so they possessed geometry of 7x5x1 mm. The specimens are tightened in the clamps of the sample holder, and the temperature is then decreased to and held at the starting temperature (-50°C) for 10 min before the measurements are started. The temperature is then increased by 3°C/min up to a top value of 200°C as data are recorded. The oscillation frequency is held at 1 Hz at constant amplitude of 10.0 µm. DMA measurements give values for storage modulus (E').

Yet another advantage of using carbon fibers is their inherent strength which makes them suitable for use in structural batteries which are able to take up mechanical load. Such structural batteries may for instance be used in different type of vehicles, such as electric vehicles forming for instance at least a part of the chassis whereby traditional heavy, bulky and structurally parasitic batteries can be replaced providing essential weight saving potential. A parasitic battery is a battery which does not contribute to the mechanical load carrying capability.

The battery design presented in this work has several other advantages. The short distance and large cross-section between the negative and positive electrode materials makes it possible to utilize electrolytes with poor conductivity without creating large ohmic losses. Whereas a traditional laminar structure results in electrode distances of at least several tens of micrometer, and a corresponding large ohmic potential drop, the here presented design has no such limitations.

The design of the battery also allows for a more or less free forming of the battery, as long as the electrically insulating polymer layer acting as an electrolyte can be applied.

If a higher areal energy density is required the battery can simply be made thicker while other properties remain unchanged, thus still making use of all active material and the full depth of the electrodes. Batteries with higher cell voltages can in principle be constructed by connecting several cells together in series.

Yet another advantage is that the weight and volume of parasitic cell components such as separator and current collectors can be kept at a minimum, and substantially higher specific and gravimetric energy densities are achievable, superior even to conventional cell designs based on the same active materials. The ease of manufacturing not including any costly or time-consuming manufacturing steps provides advantages compared to most other microbattery designs.

The amount of separator material can be reduced significantly with the proposed design, as compared to conventional batteries. Assuming a loading density of 3.4 mg/cm² of active material in the negative electrode in a conventional Li-ion battery, a 20 µm thick separator would increase the volume of the battery cell with 0.88 mm³/(mg active negative electrode material). As comparison, 500 nm and 100 nm thick coatings (used as separator) with the proposed method would correspond to a separator volume per mass active material of 0.25 and 0.05 mm³/mg, respectively. This, by assuming a cylindrical CF with a diameter of 5 µm and a CF density of 1.78 g/cm³.

Without wishing to be bound by any specific scientific theories the inventors believe that the electro driven polymerization facilitates and achieves covalent binding between the carbon fiber and the insulating polymer layer. This has the advantages of giving a very high adhesion of the polymer layer.

According to one embodiment, said carbon fiber has a length of at least 1 mm. In an alternative embodiment, said carbon fiber has a length of at least 1 cm.

Carbon fibers with a length of at least 1 cm enable easy manufacture of larger structural batteries. In theory the carbon fibers may be made indefinitely long, although 10cm currently is a convenient size in practice. Batteries comprising carbon fibers of different lengths are conceived.

One additional advantage is the possibility to use the same design independently of the desired capacity of the battery. If a higher areal energy density is required the battery, and the carbon fibers, can simply be made longer while other properties remain unchanged.

According to one embodiment said carbon fiber has stiffness in the interval 100-1000 GPa and strength in the interval 1-10 GPa in the longitudinal direction of said carbon fiber. The ability to use carbon fibers having stiffness and strength in this interval may allow the implementation of the battery as structural batteries, wherein the battery forms part of a load bearing structure, for instance in cell phones, vehicles or airplanes. Throughout the description and in the claims the stiffness and strength of a fiber in the longitudinal direction is measured as outlined in the book "Microstructural design of fiber composites" by Tsu-Wei Chou, published April 24, 1992, ISBN-13: 978-0521354820.

According to another possible embodiment said electrically insulating polymer layer has a thickness in the interval from 10 to 800 nm, preferably in the interval from 200nm-600nm.

According to another possible embodiment said metal ions are Li⁺ ions.

According to one possible embodiment said positive electrode material comprises LiFePO₄ as intercalating material.

According to one possible embodiment said positive electrode material further comprises carbon black or carbon nano tubes.

In one embodiment said positive electrode material further comprises particles on nano size, i.e. particles with a diameter in the range from 10⁻⁹ to 10⁻⁵ m. Examples of nano sized particles include but are not limited to particles of carbon black, and LiFePO₄.

In a second aspect there is provided a method of manufacturing a battery half cell comprising the steps of:
a) providing a carbon fiber as a negative electrode said carbon fiber comprising a plurality of layers with carbon atoms having graphite structure, said layers having an ability of intercalating with metal ions, said carbon fiber having a strength of at least 1 GPa and a stiffness of at least 100 GPa in the longitudinal direction of said carbon fiber,
b) coating said carbon fiber is at least partially with at least one electrically insulating polymer layer acting as an ionically conducting electrolyte, wherein said insulating polymer layer is permeable for metal ions, said insulating polymer layer having a stiffness of at least 0.5 MPa, said insulating polymer layer having an ionic conductivity of at least 10⁻¹⁰ S/m and an electrical resistivity of at least 10¹⁰ Ωm. In an alternative embodiment the electrical resistivity is at least 10¹² Ωm. In one embodiment the method for the manufacturing of the battery further comprises the step of c) further applying a material as a positive electrode applied outside and in contact with said electrically insulating polymer layer, said positive electrode material comprising an intercalating material, said positive electrode material being in contact with a conductor adapted to collect an electrical current from the positive electrode. This will give a battery.

In the manufacturing method said insulating polymer layer is applied with an electro-driven polymerization reaction. A skilled person realizes that the current which should be applied during the electro-driven polymerization must be adapted to the circumstances such as the monomers utilized for the polymerization, the solvent and other conditions.

In one embodiment the metal ions are incorporated into the insulating polymer layer already during the polymerization. This has the advantage that the insulating polymer layer can be a fully functional electrolyte without swelling or with minimal swelling in contact with an external liquid electrolyte or an applied positive electrode material. In one embodiment of the method the metal ions are ions of lithium.

In one embodiment, the at least one of a polarization time of the electro-driven polymerization reaction, a monomer concentration in the polymerization reaction, or a lithium ion concentration in the polymerization reaction is varied for varying the coating thickness of the polymer layer.

In one embodiment, the lithium ion concentration is varied by increasing the lithium ion concentration in the polymerization reaction, whereby the thickness of the polymer layer coating is decreased.

In one embodiment there are lithium ions present during the electro driven polylmerization reaction. This has the advantages of achieving a polymer layer comprising lithium ions. In alternative methods Li-ions would otherwise have to be added to the polymer layer for instance by diffusion of ions into the polymer coating and this procedure may have disadvantages if the polymer coating would expand to such an extent that it would crack and/or disrupt in any other way. The embodiment with lithium ions present during the electro driven polylmerization reaction avoids the problem.

In yet another aspect there is provided a battery comprising a battery half cell as described above, and further comprising a material as a positive electrode applied outside and in contact with said electrically insulating polymer layer, said positive electrode material further comprising at least one type of metal ions, said battery further comprising a conductor adapted to collect an electrical current from the positive electrode material.

In one embodiment the positive electrode material comprises a polymer. In one embodiment the positive electrode material comprises LiFePO₄. In one embodiment the positive electrode material further comprises at least one selected from the group consisting of carbon black and carbon nano tubes. In one embodiment the positive electrode material further comprises particles with a diameter in the range from 10⁻⁹ to 10⁻⁵ m.

Further embodiments are defined in the appended claims. The embodiments defined for the battery half cell or battery also applies to the method of manufacturing the half cell or battery respectively.

### Brief description of the drawings

The invention is now described, by way of example, with reference to the accompanying drawings, in which:
Fig. 1 shows an electron micrograph of unsized IMS65 CF, with a diameter of 5 µm as described in the experimental section.
Fig. 2 shows an electron micrograph of coated fibers as described in the experimental section.
Fig. 3 shows 10 charge and discharge cycles for a battery as described in the example.
Fig. 4 shows the first charge and discharge cycle of the cell as detailed in the example.
Fig. 5 shows the effect of polarization time.
Fig. 6 shows the effect of salt concentration.
Fig. 7 shows TGA of a poly (A) electrocoated CF.
Fig 8 shows a cross-section SEM image, showing a CF coated from 40:60 SR550:SR209 1 M Li-triflate during 150 seconds. The darker polymer coating layer is indicated by arrow.
Fig 9 shows a cross-section SEM image (higher magnification than in figure X), showing a CF coated from 40-60 SR550-SR209 1 M Li-triflate during 150 seconds. The darker polymer coating (as indicated by white arrow) for this coating composition showed a thickness consistently in the range of 100-200 nm.
Figs 10-11 show the set-up comprising a coated CF roving in direct contact with a lithium metal foil

Before the invention is disclosed and described in detail, it is to be understood that this invention is not limited to particular compounds, configurations, method steps, substrates, and materials disclosed herein as such compounds, configurations, method steps, substrates, and materials may vary somewhat. It is also to be understood that the terminology employed herein is used for the purpose of describing particular embodiments only and is not intended to be limiting since the scope of the present invention is limited only by the appended claims and equivalents thereof.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

The term electrical resistivity for instance in connection with the polymer layer refers to the electrical resistance of the polymer layer. This is measured if one conductor is on one side of the polymer layer and another conductor is on the other side of the polymer layer. The electrical resistivity does not take into account any ions flowing across the polymer layer.

The term electrocoating as used herein denotes the process of applying a polymer layer to a substrate such as a carbon fiber, where the polymerization reaction is driven by an electric potential between the substrate and the surrounding solution of monomers/oligomers. The bare uncoated surface of the substrate attracts monomers/oligomers which react to a polymer. When the polymer layer has become so thick that the electrical resistance is large the polymerization reaction seizes and polymer layer does not grow. This process is also referred to as an electro driven polymerization reaction.

The term ionic conductivity or electrical ionic conductivity in connection with a polymer layer denotes the ability of the polymer layer to let ions pass. When ions pass across the polymer layer a current can flow in an electrical circuit and thus a conductivity can be defined for the polymer layer for the ions passing the polymer layer.

Other features and uses of the invention and their associated advantages will be evident to a person skilled in the art upon reading the description and the examples.

It is to be understood that this invention is not limited to the particular embodiments shown here. The following examples are provided for illustrative purposes and are not intended to limit the scope of the invention since the scope of the present invention is limited only by the appended claims and equivalents thereof.

### Examples

### Materials and methods

### Coating

The coating solution consisted of a mixture of the monomer SR550 (Methoxy polyethylene glycol (350) monomethacrylate) = monomer A provided by Sartomer, the solvent dimethyl formamide (DMF), provided by Sigma-Aldrich, and the salt lithium trifluoromethanesulfonate (Li-triflate), provided by Sigma-Aldrich. The solution was prepared by mixing 1 M Li-triflate in SR550 with DMF in a 1:1 ratio by weight. The carbon fibers (CF) used was unsized Toho Tenax IMS65 24k rowing kindly provided by Toho-Tenax Europe GmbH. These fiber tows were divided manually to consist of approximately 100 fibers and attached to a 3*1 cm² PTFE rig including copper current collectors. A three electrode electrochemical cell was assembled by submerging the rig, with the CF as working electrode (WE), into the coating solution along with a 24k CF bundle as counter electrode (CE) and a piece of lithium metal as quasi-reference electrode (RE). The two CF tows were aligned in parallel. The cathodic electro-coating was performed at -0.25 V vs. RE for 150 s in a glove box with argon atmosphere. In one embodiment, polarization was performed during 15s. Thereafter, the coated CF, still fixed in the rig, was washed in DMF and dried in the glove box at room temperature. The polymer coating was inspected by SEM and the average thickness was determined from TGA to be 470 nm.

### Battery

The lithium ion battery was assembled using the coated bundle of carbon fibers fixed in the rig as negative electrode. The rig was attached to an aluminum foil draped around a PTFE sheet by use of epoxy adhesive and the foil acted as current collector for the positive electrode. A slurry consisting of nano-sized LiFePO₄ and Super-P carbon, 200-400 nm and 20-30 nm respectively, and the binder PvDF; 22 wt%, 67 wt% and 11 wt% respectively, suspended in DMF was applied onto the coated carbon fibers and aluminum foil, so that after drying, the porous positive electrode then formed comes into direct contact with the coated fibers as well as the aluminum foil. In this design the polymeric coating on the fibers acts as a combined separator and solid electrolyte and prevents short-circuiting of the cell. A liquid electrolyte, 1M LiPF6 in EC:DEC 1:1 by weight, was then added so that the whole battery was soaked in electrolyte. The equivalent capacity of LiFePO₄ added was 10 % less than that of the CF to avoid over-charging of the CF.

The positive electrode was formed by the addition of a slurry of active material, carbon particles and a solvent. This slurry was left to dry in direct contact with the electro-coated CF and the positive current collector to yield a cake of dry electrode material. A liquid electrolyte, 1M LiPF6 in EC:DEC 1:1 by weight, was then added so that the whole electrode was soaked in electrolyte.

The assembled battery was cycled at room temperature inside the glove box 5 times at a rate of 1C (corresponding to full charge of the positive electrode in one hour) and 5 times at C/10, with the cut-off potentials at 3.8 V during charge and 2.5 V during discharge.

### Results

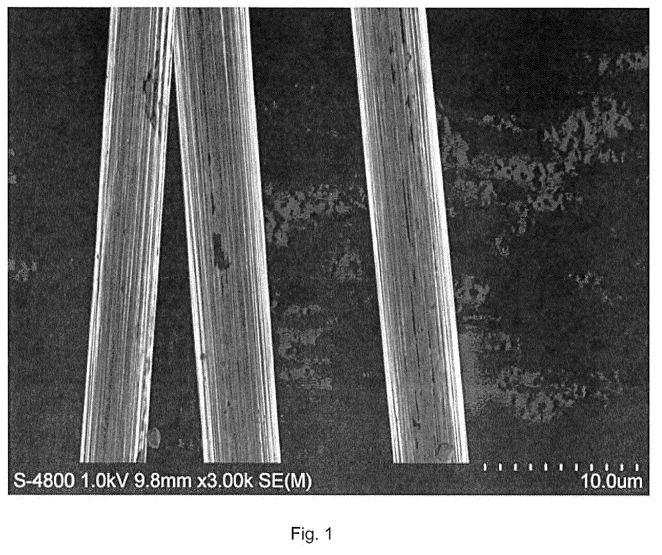

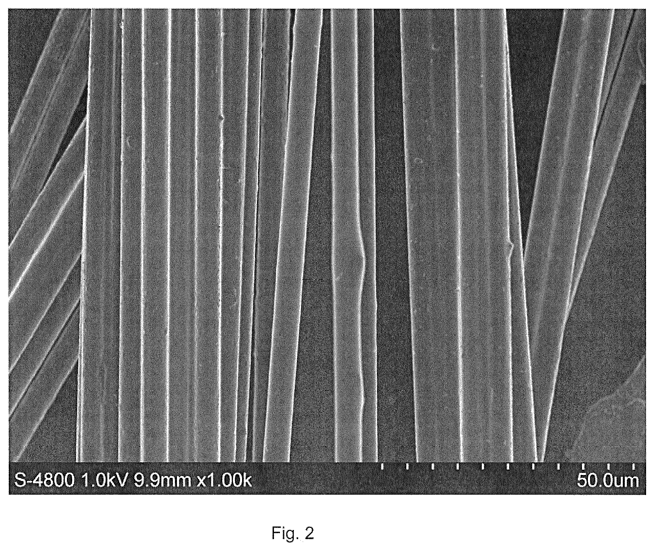

The unsized IMS65 CF, with a diameter of 5 µm, has a bare and ridged surface as can be seen in the SEM micrograph, Figure 1. The electro-coating of these CF surfaces yielded a polymethacylatic coating of 470 nm evenly distributed around each fiber. The coating showed no apparent pinholes as observed by SEM, Figure 2. The lithium salt concentration in the polymer coating was 1.5% (carbon to lithium ratio was 48). The lithium salt is incorporated into the coating already during the polymerization, meaning that the polymer not only works as a separator but has the ability to be a fully functional electrolyte even without swelling in contact with an external liquid electrolyte.

The lithium-ion battery, based on a bundle of carbon fibers negative electrodes connected in parallel and a continuous phase of the positive electrode was evaluated electrochemically. An open circuit voltage of about 2 V was measured before the first charge cycle. Even though both the LiFePO₄ and Super-P carbon particles were nano-sized the thin layer of polymer successfully managed to separate them from the CF negative electrode, thus avoiding short-circuiting the cell.

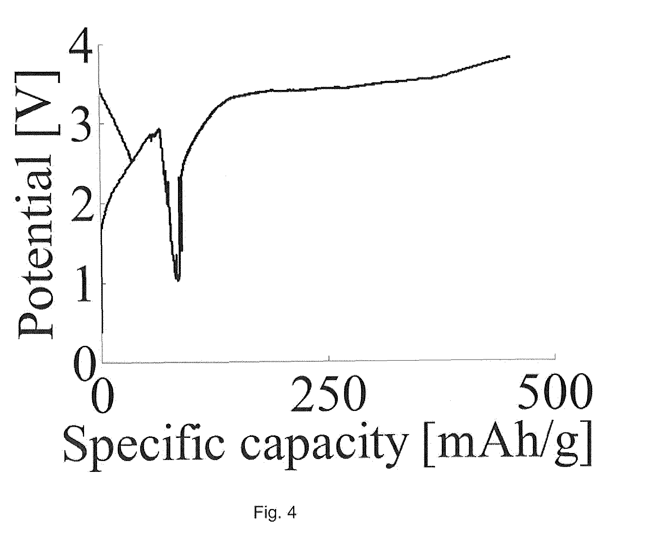

The first charge and discharge cycle of the cell is shown in Figure 4. A small short-circuit after 0.5 hours during the first charging cycle is seen as a drastic drop in the cell voltage. The cell seems however to be self-healing. The following 1C cycles showed great consistency after the first charging, using 25 % of the theoretical capacity of the applied positive electrode material. However, the current efficiency was at best 65 %, indicating a side-reaction such as reduction of remaining SR550 monomer.

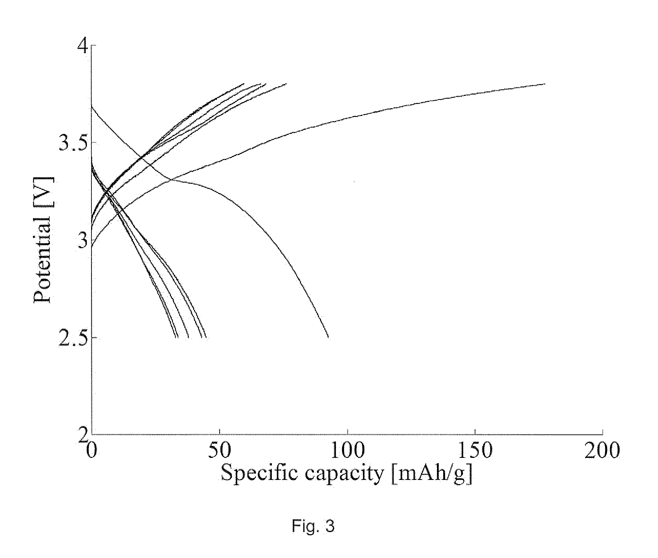

The cell was thereafter cycled at a C/10 rate, and as expected the capacity increased. However, the problem with low current efficiency remained. After an initial increase of capacity in the first cycles, the capacity started to drop on subsequent cycles, which likely is due to loss of liquid electrolyte by evaporation and insufficient closing of the cell. Further cycling was therefore terminated. The battery was in total cycled 10 times without any further indications of short-circuits. This is shown in figure 3.

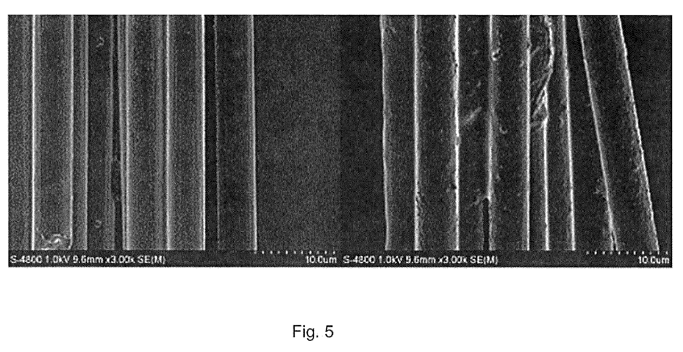

The uncoated as-received unsized fibres have a conspicuous rough surface with typical crenulations along the fibre lengths (Fig. 1). Figure 5 shows the Scanning Electron Microscope (SEM) images of carbon fibres electrocoated with a first polymer **A** from monomer **A,** poly(**A**), obtained after two different polarization times (15 and 150 s), i.e. wherein polarization is measured in volt relative the reference, e.g. (RE), at which polarization the coating of the carbon fibre(s) occurs through polymerization of the monomer in the electrolyte. The fibres were coated in a 1:1 monomer to DMF ratio and a 0.2 M Li-triflate concentration relative to monomer **A.** Monomer A refers to the brand SR550® from Sartomer which is a monofunctional methacrylate, methoxy polyethylene glycol (350) monomethacrylate. For both polarization times, a dense, pinhole-free polymer coating is observed. The thickness of the coating, however, is greater for the fibres exposed to the longer polarization time (Fig. 5). This is consistent with an observation that the current density plateau is reached at polarization times exceeding 15 s, where the initiation of the polymerisation is believed to cease. Even though the chain propagation is decoupled from the initiation step, a denser packing of the polymer chains and electrostatic repulsion between the active growing chain ends and the fibre surface, as the polymerisation mechanism is believed to be anionic character, lead to a thicker polymer coating.

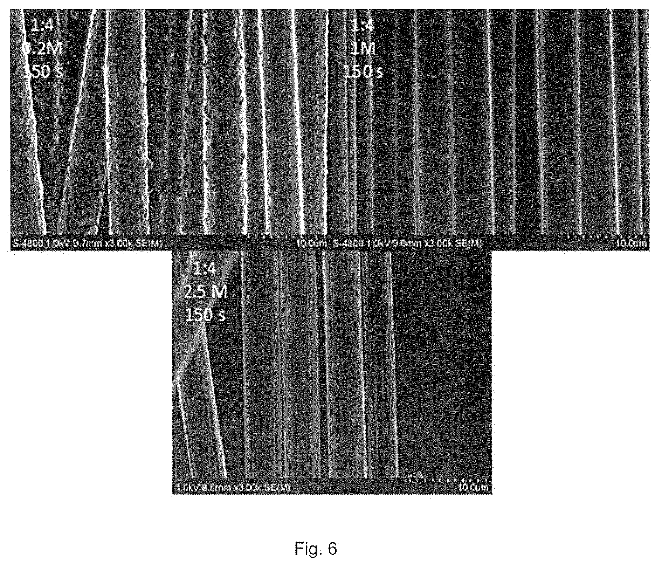

Figure 6 illustrates the effect of Li-triflate concentration on coating thickness and coating quality, i.e. surface coverage and defects. According to one embodiment, other Li-ion or Li salt concentrations than Li-triflate may be used and have similar effects.

The effect of salt concentration is illustrated for poly(**A**). Salt concentration (M) is given in the inscription in each micrograph. A lower concentration is leading to a thicker polymer coating. A lower salt concentration was found to result in thicker polymer coatings. In the case of a 2.5 M Li-salt concentration in the monomer solution a very thin coating is observed and some areas of the fibre surfaces apparently remain un-coated. As the charge required to initiate the polymerisation is similar regardless of salt concentration , the difference must lie in the propagation/termination processes. The propagation rate for anionic polymerisation, is known to be affected by the relation between free and associated anionic monomers/counter-cations . A higher degree of association results in a lower propagation rate. When the Li-triflate concentration in the coating electrolyte is increased, the described propagation equilibrium should accordingly be shifted towards a higher degree of association leading to a lower propagation rate and, therefore, a thinner coating.

The monomer and lithium triflate was dissolved in DMF in different concentrations. The monomer concentration in the electrolyte affects the coating quality. For the monofunctional monomer a minimum of 1:4 monomer: DMF weight ratio is recommended as this, and higher monomer concentrations, result in thick, homogeneous coatings. Also, the lithium triflate concentration was found to affect the coating thickness. Lower Li-triflate concentrations result in thicker coatings. For future electrocoating of monofunctional monomers on carbon fibres a 1:1 monomer: DMF weight ratio and a 1 M Li-triflate to the monomer are recommended. The minimum recommended polarization time for this mixture is 150 s.

Coating thickness was measured for poly(**A**) coated fibres produced from 1:1 monomer **A**:DMF and 1 M Li triflate polarized for 150 s. For reference the diameter of the as-received, unsized, IMS65 carbon fibre was measured. The recorded diameter of the reference carbon fibre sample, determined gravimetrically using the modified Wilhelmy-technique, was found to be 5.00 ± 0.07 µm. This is consistent with the fibre diameter reported by the supplier. Poly(**A**) coated carbon fibres were found to have diameters of 6.37 ± 0.13 µm. Hence, these measurements indicate a coating thickness of approximately 685 nm.

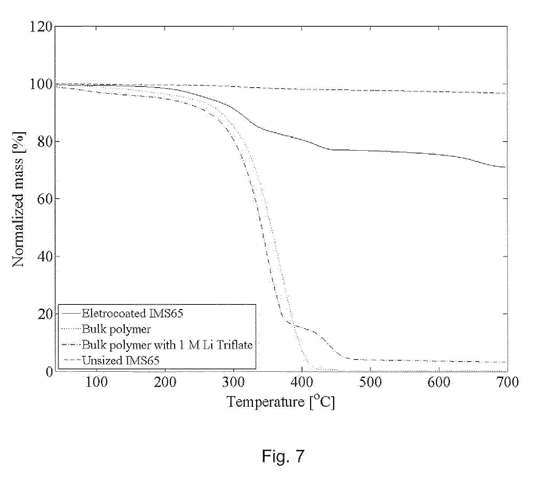

To further determine the coating thickness of the carbon fibres electrocoated with poly(**A**), thermogravimetric analysis (TGA) was performed. The result from the TGA of poly(**A**) coated carbon fibres obtained from a composition with 1 M Li-triflate with respect to the monomer in 1:1 mixing ratio per weight of monomer **A** and DMF is shown in Fig. 7. In the same plot the TGA results from as-received, unsized, carbon fibres as well as bulk polymer samples with and without Li-triflate sample are presented for reference. The mass of unsized IMS65 is practically unchanged in the range 40-700 °C in a nitrogen atmosphere, which implies that the observed mass loss of the electrocoated sample is related to the coating. Two zones with weight loss were identified for the electrocoated carbon fibres sample - around the temperatures 300 °C and 400 °C. The weight loss at approximately 300 °C is caused by decomposition of poly(**A**), whereas the zone at 400 °C is related to the decomposition of lithium triflate. Supporting evidence is found in the TGA measurements on bulk polymer samples. The TGA plot of bulk poly(**A**) without any lithium triflate undergoes only a single step degradation at approximately 300 °C, while the bulk polymer sample with addition of 1M Li triflate exhibits two step degradation at approximately 300 °C and 400 °C, respectively. Consequently, the average coating thickness was calculated using the total weight loss of both polymer and Li triflate. The calculated average solid polymer electrolyte coating thickness was 470 nm.

### Capacity of coated carbon fibers - test with external separator

### Method

A roving of approximately 1000 CFs was first coated and dried according to the procedure described above. The coating consisted of a poly(A) made from a 1:1 monomer: DMF and 1 M Li-triflate composition and 150 s polarization time. Batteries were built under argon atmosphere with the coated CFs as working electrode, lithium metal as counter electrode and a Whatman Glass microfiber GF/A (260 µm) as separator. The electrolyte used was Selectilyte LP 40, 1 M LiPF6 in ethylene carbonate (EC):diethyl carbonate (DEC) 1:1 by weight provided by Merck KGaA. The current collectors, provided by Advent Research Materials, consisted of copper foil, 20 µm thick, and nickel foil, 25 µm thick, for the working and counter electrode, respectively. The currents used during discharge are given in multiples of C - the current needed to charge the electrode material completely in one hour. The specific capacity used to calculate C-rate was that of graphite, 372 mAh/g.

### Result

The coated carbon fibres were utilized as negative electrodes in a Li-ion battery, using lithium metal as counter electrode. In this set-up, an external separator as well as a liquid electrolyte is used to test the effect of the coating on the lithiation and delithiation taking place during battery cycling. It can be seen from the cycling results (not shown) that the coating does not deteriorate the cycling characteristics of the CF type used. At low currents (C/10) the specific capacity was 250-260 mAh/g after the first two cycles and at high currents (1C) up to 107 mAh/g. These results are in line with studies on unsized and uncoated IMS65 carbon fibres used as negative electrodes, where capacities for unsized carbon fibres were reported to be 360 mAh/g and 177 mAh/g for low and high currents respectively. Consequently, the presence of the thin SPE coating moderately reduces the rate for lithiation/delithiation of the IMS65 carbon fibre electrode.

### Thickness measurements using SEM

### Method

The coating could also be applied from mixtures of monomers. A roving of approximately 1000 CFs were electro-coated from a liquid consisting of 1 M lithium triflate SR550:SR209 (tetraethylene glycol dimethacrylate) 40:60, dissolved 1:1 with DMF. After 150 s of polarization, the coating thickness was estimated using cross-sectional SEM imaging.

### Results

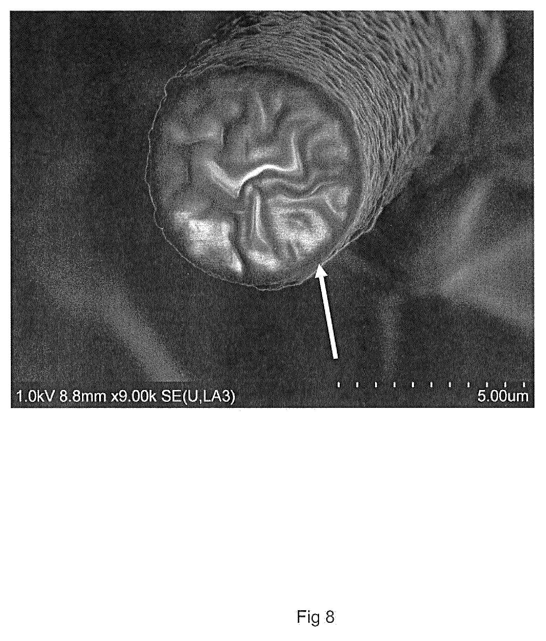

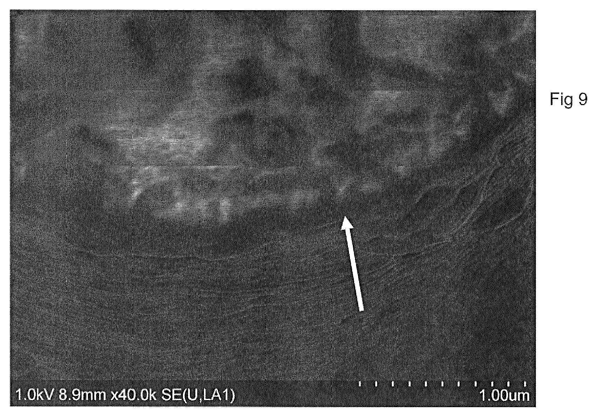

CF coated in a monomer mixture consisting of SR550:SR209 40:60 generated coatings, uniformly applied to the CF surfaces, displaying thicknesses in the range of 100-200 nm (fig. 8-9).

### Cycling test of batteries with CF in direct contact with lithium

### Method

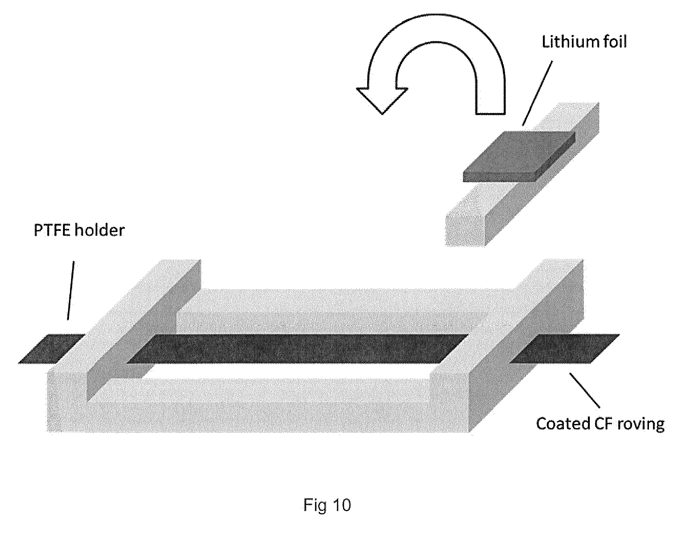

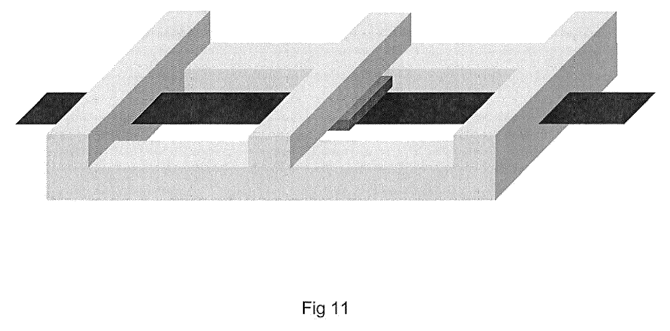

Rovings, consisting of approximately 1000 CFs, coated from a solution of 1 M lithium triflate SR550:SR209 (tetraethylene glycol dimethacrylate) 40:60, dissolved 1:1 with DMF, was utilized as electrode/separator/electrolyte composite in a half-cell battery with lithium metal foil as counter electrode. The CF rovings were in direct contact with the lithium metal, as confirmed by electrical impedance spectroscopy (EIS) (fig. 10-11).

A half-cell battery was built using two different designs. In the first design, the battery is submerged in liquid electrolyte (1 M LiPF6 in ethylene carbonate (EC):diethyl carbonate (DEC) 1:1 by weight) to ensure ionic conduction pathways between the all CFs and the entire lithium metal foil.

The second design also consisted of coated CF rovings in direct contact with the lithium metal foil. However, no liquid electrolyte was added - ionic conduction could only take place where the polymeric coating and lithium metal made contact.

### Result

Complete charging and discharging of the coated CF rovings, versus lithium metal, were realized both for dry and electrolyte-swelled samples. The sample submerged in liquid electrolyte showed a capacity of of 250 mAh/g at a rate of C/10. The dry samples showed a much lower capacity, since only a very small surface of the polymeric coating on the CFs was in direct contact with the lithium foil, although showing the electrolyte function of the coating.

The volumetric capacity, when considering the coated CF rovings as an electrode material/current collector/separator/electrolyte composite (that is, all parts of a battery cell except the positive electrode , positive current collector and electrolyte in the pores of the positive electrode), was 410 mAh/cm³ (for 250 mAh/g) at 100 nm thickness of the separator. This is considerably higher than for the same components in a conventional battery battery. (Kjell, M et al. Journal of Power Sources, 243 (2013) 290-298). Assuming a graphite loading density of 3.4 mg/cm², a negative current collector thickness of 30 µm, a separator thickness of 20 µm and a negative electrode thickness of 30 µm, a corresponding volumetric capacity for a conventional battery is 160 mAh/cm³.

## Claims

1. A battery half cell comprising at least one carbon fiber as negative electrode, said carbon fiber comprising a plurality of layers with carbon atoms having graphite structure, said plurality of layers having an ability of intercalating metal ions, said carbon fiber having a strength of at least 1 GPa and a stiffness of at least 100 GPa in the longitudinal direction of said carbon fiber, said carbon fiber is at least partially coated with at least one electrically insulating polymer layer acting as an ionically conducting electrolyte, wherein said insulating polymer layer is permeable for metal ions, said insulating polymer layer having a stiffness of at least 0.5 MPa, said insulating polymer layer having an electrical ionic conductivity of at least 10⁻¹⁰ S/m and an electrical resistivity of at least 10¹⁰ Ωm, and wherein said electrically insulating polymer layer has been applied with an electrodriven polymerization reaction.

2. The battery half cell according to claim 1 wherein said carbon fiber has a stiffness in the interval 100-1000 GPa and a strength in the interval 1-10 GPa in the longitudinal direction of said carbon fiber.

3. The battery half cell according to any one of claims 1-2, wherein said insulating polymer layer has a thickness in the interval from 10 to 800 nm, preferably in the interval from 100 to 600 nm.

4. The battery half cell according to any one of claims 1-3, wherein said metal ions are Li⁺ ions.

5. A battery comprising a battery half cell according to any one of claims 1 - 4, and further comprising a material as a positive electrode applied outside and in contact with said electrically insulating polymer layer, said positive electrode material further comprising at least one type of metal ions, said battery further comprising a conductor adapted to collect an electrical current from the positive electrode material.

6. The battery according to claim 5, wherein said positive electrode material comprises LiFePO₄.

7. The battery according to any one of claims 5-6, wherein said positive electrode material further comprises at least one selected from the group consisting of carbon black and carbon nano tubes.

8. A method of manufacturing a battery half cell comprising the steps of
a) providing a carbon fiber as a negative electrode said carbon fiber comprising a plurality of layers with carbon atoms having graphite structure, said plurality of layers having an ability of intercalating with metal ions, said carbon fiber having a strength of at least 1 GPa and a stiffness of at least 100 GPa in the longitudinal direction of said fiber,
b) coating said carbon fiber is at least partially with at least one electrically insulating polymer layer acting as an electrolyte, wherein said insulating polymer layer is permeable for metal ions, said insulating polymer layer having a stiffness of at least 0.5 MPa, said insulating polymer layer having an ionic conductivity of at least 10⁻¹⁰ S/m and an electrical resistivity of at least 10¹⁰ Ωm, wherein said insulating polymer layer is applied with an electro-driven polymerization reaction.

9. The method according to claim 8, wherein the metal ions are incorporated into the insulating polymer layer already during the polymerization.

10. The method according to any one of claims 8-9, wherein the metal ions are ions of lithium.

11. The method according to any of claims 8-10, wherein the at least one of a polarization time of the electro-driven polymerization reaction, a monomer concentration in the polymerization reaction , or a lithium ion concentration in the polymerization reaction is varied for varying the coating thickness of the polymer layer.

12. The method according to claim 10, wherein the lithium ion concentration is varied by increasing the lithium ion concentration in the polymerization reaction, whereby the thickness of the polymer layer coating is decreased.

13. The method according to any one of claims 8-12 further comprising the step c): applying a material as a positive electrode applied outside and in contact with said insulating polymer layer, said positive electrode material comprising metal ions and counter-ions, said positive electrode material being in contact with a conductor adapted to collect an electrical current from the positive electrode.

## Patentansprüche

1. Batteriehalbzelle umfassend zumindest eine Kohlenstofffaser als negative Elektrode, die Kohlenstofffaser umfassend eine Mehrzahl von Schichten mit Kohlenstoffatomen, die eine Graphitstruktur aufweisen, die Mehrzahl der Schichten aufweisend eine Fähigkeit zum Einfügen von Metallionen, die Kohlenstoffaser aufweisend eine Festigkeit von zumindest 1 GPa und eine Steifigkeit von zumindest 100 GPa in der Längsrichtung der Kohlenstofffaser, die Kohlenstoffaser zumindest teilweise beschichtet mit zumindest einer elektrisch isolierenden Polymerschicht, die als ein ionisch leitender Elektrolyt fungiert, wobei die isolierende Polymerschicht durchlässig für Metallionen ist, die isolierende Polymerschicht eine Steifigkeit von zumindest 0,5 MPa aufweist, die isolierende Polymerschicht eine elektrische lonenleitfähigkeit von zumindest 10⁻¹⁰ S/m und einen spezifischen elektrischen Widerstand von zumindest 10¹⁰ Ωm aufweist, und wobei die elektrisch isolierende Polymerschicht mit einer elektrisch betriebenen Polymerisationsreaktion aufgebracht wurde.

2. Batteriehalbzelle nach Anspruch 1, wobei die Kohlenstofffaser eine Steifigkeit in dem Bereich von 100-1000 GPa und eine Festigkeit in dem Bereich von 1-10 GPa in der Längsrichtung der Kohlenstofffaser aufweist.

3. Batteriehalbzelle nach einem der Ansprüche 1-2, wobei die isolierende Polymerschicht eine Dicke in dem Bereich von 10 bis 800 nm, vorzugsweise in dem Bereich von 100 bis 600 nm, aufweist.

4. Batteriehalbzelle nach einem der Ansprüche 1-3, wobei die Metallionen Li⁺ Ionen sind.

5. Batterie umfassend eine Batteriehalbzelle nach einem der Ansprüche 1-4, und weiterhin umfassend ein Material als eine positive Elektrode aufgebracht außerhalb von und in Kontakt mit der elektrisch isolierenden Polymerschicht, das positive Elektrodenmaterial weiterhin umfassend zumindest eine Art von Metallionen, die Batterie weiterhin umfassend einen Leiter, der zum Sammeln eines elektrischen Stromes von dem positiven Elektrodenmaterial ausgebildet ist.

6. Batterie nach Anspruch 5, wobei das positive Elektrodenmaterial LiFePO₄ umfasst.

7. Batterie nach einem der Ansprüche 5-6, wobei das positive Elektrodenmaterial weiterhin zumindest einen ausgewählt aus der Gruppe bestehend aus Ruß und Kohlenstoffnanoröhren umfasst.

8. Verfahren zum Herstellen einer Batteriehalbzelle umfassend die Schritte
a) Bereitstellen einer eine Kohlenstofffaser als eine negative Elektrode, die Kohlenstofffaser umfassend eine Mehrzahl von Schichten mit Kohlenstoffatomen, die eine Graphitstruktur aufweisen, die Mehrzahl der Schichten aufweisend eine Fähigkeit zum Einfügen von Metallionen, die Kohlenstoffaser aufweisend eine Festigkeit von zumindest 1 GPa und eine Steifigkeit von zumindest 100 GPa in der Längsrichtung der Faser,
b) Beschichten der Kohlenstoffaser zumindest teilweise mit zumindest einer elektrisch isolierenden Polymerschicht, die als ein Elektrolyt fungiert, wobei die isolierende Polymerschicht durchlässig für Metallionen ist, die isolierende Polymerschicht eine Steifigkeit von zumindest 0,5 MPa aufweist, die isolierende Polymerschicht eine elektrische lonenleitfähigkeit von zumindest 10⁻¹⁰ S/m und einen spezifischen elektrischen Widerstand von zumindest 10¹⁰ Ωm aufweist, und wobei die elektrisch isolierende Polymerschicht mit einer elektrisch betriebenen Polymerisationsreaktion aufgebracht wurde.

9. Verfahren nach Anspruch 8, wobei die Metallionen bereits während der Polymerisation in die isolierende Polymerschicht eingebaut werden.

10. Verfahren nach einem der Ansprüche 8-9, wobei die Metallionen Ionen von Lithium sind.

11. Verfahren nach einem der Ansprüche 8-10, wobei zumindest eine von einer Polarisationszeit der elektrisch betriebenen Polymerisationsreaktion, einer Monomerkonzentration in der Polymerisationsreaktion oder eine Lithium-Ionenkonzentration in der Polymerisationsreaktion verändert wird zum Verändern der Beschichtungsdicke der Polymerschicht.

12. Verfahren nach Anspruch 10, wobei die Lithium-lonenkonzentration verändert wird durch Erhöhen der Lithium-lonenkonzentration in der Polymerisationsreaktion, wodurch die Dicke der Polymerschichtbeschichtung verringert wird.

13. Verfahren nach einem der Ansprüche 8-12, weiterhin umfassend den Schritt c):
Aufbringen eines Materials als eine positive Elektrode aufgebracht außerhalb von und in Kontakt mit der isolierenden Polymerschicht, das positive Elektrodenmaterial umfassend Metallionen und Gegenionen, wobei das positive Elektrodenmaterial in Kontakt mit einem Leiter ist, der zum Sammeln eines elektrischen Stromes von der positiven Elektrode ausgebildet ist.

## Revendications

1. Demi-cellule de batterie comprenant au moins une fibre de carbone comme électrode négative, ladite fibre de carbone comprenant une pluralité de couches avec des atomes de carbone ayant une structure en graphite, ladite pluralité de couches ayant une capacité à intercaler des ions métalliques, ladite fibre de carbone ayant une résistance d'au moins 1 GPa et une rigidité d'au moins 100 GPa dans la direction longitudinale de ladite fibre de carbone, ladite fibre de carbone est au moins partiellement revêtue avec au moins une couche polymère électriquement isolante agissant comme électrolyte ioniquement conducteur, dans laquelle ladite couche polymère isolante est perméable aux ions métalliques, ladite couche polymère isolante ayant une rigidité d'au moins 0,5 MPa, ladite couche polymère isolante ayant une conductivité ionique électrique d'au moins 10⁻¹⁰ S/m et une résistivité électrique d'au moins 10¹⁰ Ωm, et dans laquelle ladite couche polymère électriquement isolante a été appliquée avec une réaction de polymérisation à commande électrique.

2. Demi-cellule de batterie selon la revendication 1, dans laquelle ladite fibre de carbone a une rigidité dans l'intervalle 100 - 1000 GPa et une résistance dans l'intervalle 1 - 10 GPa dans la direction longitudinale de ladite fibre de carbone.

3. Demi-cellule de batterie selon l'une quelconque des revendications 1 à 2, dans laquelle ladite couche polymère isolante a une épaisseur dans l'intervalle de 10 à 800 nm, de préférence dans l'intervalle de 100 à 600 nm.

4. Demi-cellule de batterie selon l'une quelconque des revendications 1 à 3, dans laquelle lesdits ions métalliques sont des ions Li⁺.

5. Batterie comprenant une demi-cellule de batterie selon l'une quelconque des revendications 1 à 4, et comprenant en outre un matériau comme électrode positive, appliqué à l'extérieur et en contact avec ladite couche polymère isolante électriquement, ledit matériau d'électrode positive comprenant en outre au moins un type d'ions métalliques, ladite batterie comprenant en outre un conducteur adapté à collecter un courant électrique à partir du matériau d'électrode positive.

6. Batterie selon la revendication 5, dans laquelle ledit matériau d'électrode positive comprend du LiFePO₄.

7. Batterie selon l'une quelconque des revendications 5 à 6, dans laquelle ledit matériau d'électrode positive comprend en outre au moins un choisi dans le groupe constitué de nanotubes de noir de carbone et de carbone.

8. Procédé de fabrication d'une demi-cellule de batterie comprenant les étapes consistant à :
a) fournir une fibre de carbone comme électrode négative, ladite fibre de carbone comprenant une pluralité de couches avec des atomes de carbone ayant une structure en graphite, ladite pluralité de couches ayant une capacité à s'intercaler avec des ions métalliques, ladite fibre de carbone ayant une résistance d'au moins 1 GPa et une rigidité d'au moins 100 GPa dans la direction longitudinale de ladite fibre,
b) revêtir ladite fibre de carbone au moins partiellement avec au moins une couche polymère électriquement isolante agissant comme électrolyte, dans laquelle ladite couche polymère isolante est perméable aux ions métalliques, ladite couche polymère isolante ayant une rigidité d'au moins 0,5 MPa, ladite couche polymère isolante ayant une conductivité ionique d'au moins 10⁻¹⁰ S/m et une résistivité électrique d'au moins 10¹⁰ Ωm, dans laquelle ladite couche polymère isolante est appliquée avec une réaction de polymérisation à commande électrique.

9. Procédé selon la revendication 8, dans lequel les ions métalliques sont incorporés dans la couche polymère isolante dès la polymérisation.

10. Procédé selon l'une quelconque des revendications 8 à 9, dans lequel les ions métalliques sont des ions de lithium.

11. Procédé selon l'une quelconque des revendications 8 à 10, dans lequel l'au moins un parmi un temps de polarisation de la réaction de polymérisation à commande électrique, une concentration en monomère dans la réaction de polymérisation, ou une concentration en ion lithium dans la réaction de polymérisation est varié pour moduler l'épaisseur de revêtement de la couche polymère.

12. Procédé selon la revendication 10, dans lequel la concentration en ion lithium est variée en augmentant la concentration en ion lithium dans la réaction de polymérisation, moyennant quoi l'épaisseur du revêtement de la couche polymère est réduite.

13. Procédé selon l'une quelconque des revendications 8 à 12, comprenant en outre l'étape c) consistant à : appliquer un matériau comme électrode positive, appliqué à l'extérieur et en contact avec ladite couche polymère isolante, ledit matériau d'électrode positive comprenant des ions métalliques et des contre-ions, ledit matériau d'électrode positive étant en contact avec un conducteur adapté à collecter un courant électrique à partir de l'électrode positive.
